Europäisches Patentamt

(19) European Patent Office

Office européen des brevets

(11) Publication number: **0 281 491 B1**

## (12) EUROPEAN PATENT SPECIFICATION

(45) Date of publication of patent specification:
17.07.91 Bulletin 91/29

(51) Int. Cl.⁵: **F16C 31/06, F16H 25/22**

(21) Application number: 88500006.7

(22) Date of filing: 28.01.88

(54) A system comprising a recirculating ball spindle and an associated open nut, of use for supported screwthreaded spindles.

(30) Priority: 30.01.87 ES 8700224

(43) Date of publication of application:
07.09.88 Bulletin 88/36

(45) Publication of the grant of the patent:
17.07.91 Bulletin 91/29

(84) Designated Contracting States:
DE FR GB IT

(56) References cited:
DE-A- 2 353 734
DE-A- 2 412 606
GB-A- 1 170 083
GB-A- 1 231 748

(56) References cited:
US-A- 4 303 280
PATENT ABSTRACTS OF JAPAN, vol. 10, no.
130 (M-478)[2187], 14th May 1986; & JP - A - 60
236 668 (MINORU IZAWA) 18-12-1985

(73) Proprietor: SHUTON, S.A.
Poligono Industrial "GOJAIN" Apartado 654
Villarreal de Alava Vitoria (ES)

(72) Inventor: Andonegui, Pedro Maria
Argentina, 10-quinto
E-Vitoria (ES)

(74) Representative: Elzaburu Marquez, Alberto et
al
Sres. Elzaburu Industrial Property Attorneys
Miguel Angel, 21
E-28010 Madrid (ES)

## Description

This invention relates to a system comprising a recirculating ball spindle and an associated open nut, of use for supported screwthreaded spindles

Systems of this kind with a conventional closed nut are known. However, since the spindle of closed nut systems is supported only at both ends a number of disadvantages arise such as fairly substantial bending of the spindle, leading to a low critical speed, poor rigidity and pitch inaccuracy. It becomes necessary to provide expensive retractable rests which are retracted electrically or pneumatically when the closed nut approaches, inaccurate pitch of the screwthreading being an additional disadvantage to the high cost.

From GB-A-1 231 748 a spindle guide is known, as defined in the preamble of claim 1, wherein a nut is guided on a threaded spindle via roller bodies running along closed paths. In such guide, the nut is split longitudinally, the roller bodies being guided by various separate paths, each of which extends in the thread between said nut and said threaded spindle and is completed by a return section on the outside of said nut, the roller bodies of each path being surrounded by a closed form strip which in the area of the spindle thread has a width that does not interfere with the abutment of said roller bodies against the thread grooves. The spindle guide allows both the use of a divided nut and of an undivided one cut and open on one side. This Patent 1.2317.48 has the drawback of the costly system for recirculating the balls, owing to the construction and assembly of the closed form strip enclosing the ball circuit, since a construction without precision would prevent the balls rolling, giving rise to the balls rubbing on moving through friction instead of rolling, increasing the temperature and consumption of the revolving engine. Moreover, the spindle thread also has to be constructed with a sub-spline in the thread profile, so that the strip can pass between the lower part of the ball and the spindle, without rubbing. All this makes the mechanism costly and of poor rigidity.

From GB-A-1 170 083 a ball screw and nut mechanism is known with a screwthreaded spindle provided with a helical rib, the rib pitch being considerably larger than the axial width of the same, and a nut which extends part way around the shaft, said nut having a helical recess formed therein, two rows of balls located in intermediate position between the side walls of the recess and the side walls of the rib, respectively, and a pair of return means in or close to the respective circumferential extremeties of the nut to receive the balls, as these are forcibly driven from one of the rows and carry them over the rib to the other row. To allow the rolling movement of the balls, there has to be an axial backlash in the plane formed by the helical recess section formed in the nut, the two balls and the screwthreaded spindle rib. Such backlash makes the precision of the positioning passage erroneous in its repetition, such that this mechanism cannot be applied in machines that demand great repetetiveness of positioning on changing the operating direction, such as is the case of use in numerical control machines.

It is the object of the invention to improve recirculating ball system of the kind hereinbefore set out by obviating bending of the shaft or spindle and thus increasing its critical speed, its rigidity and its accuracy of pitch. Systems of this kind are required to be simple and cheap to produce and must be so devised that the nut is free to move over the whole length of a very long spindle which is prevented from bending by means of fixed supports or rests. This invention also improves the diameter-to-length ratio in that the spindle can be of unlimited length irrespective of the nature of its end supports ; the invention is therefore of use for all recirculating ball systems in which the nut does not rotate and the spindle does.

This invention provides a system comprising a recirculating ball spindle and an associated open nut, of use for supported screwthreaded spindles, with the features set out in the characterising clause of claim 1.

In practice, when there is relative rotation between the spindle and the nut the spindle rotates and the nut moves axially, to which end any kind of means, such as a key or cotter or the like, is provided to secure the nut against rotation. In operation, the spindle can of course be supported on stationary supports in the form of columns along its whole length. When the spindle is rotated the slit nut moves axially, the spindle support columns passing between the ends of the nut slit.

The recirculating ball spindle system according to the invention can be used with a one part nut or with a two part preloaded nut, i.e. the two parts are under pressure against the edges in opposite directions, using any known kind of preloading.

An embodiment of the recirculating ball spindle according to the invention will be described hereinafter, reference being made to the drawings wherein :

Fig. 1 illustrates a system comprising a spindle and a slit or open nut engaging some of the way around the spindle, the same being supported on stationary columns or rests ;

Fig. 2 is a view of the slit nut with the inner and outer helical grooves and a cover for the assembled recirculating ball mechanism ;

Fig. 3 is a view of the open cylindrical sleeve ;

Fig. 4 is a view of the two parts which make up a cover of the recirculating ball mechanism ;

Fig. 5 is a longitudinal view of the nut ;

Fig. 6 is a front sectioned view of the nut showing the recirculating ball circuit ; and

Fig. 7 shows a detail of the cross-section of the groove in the nut outer periphery.

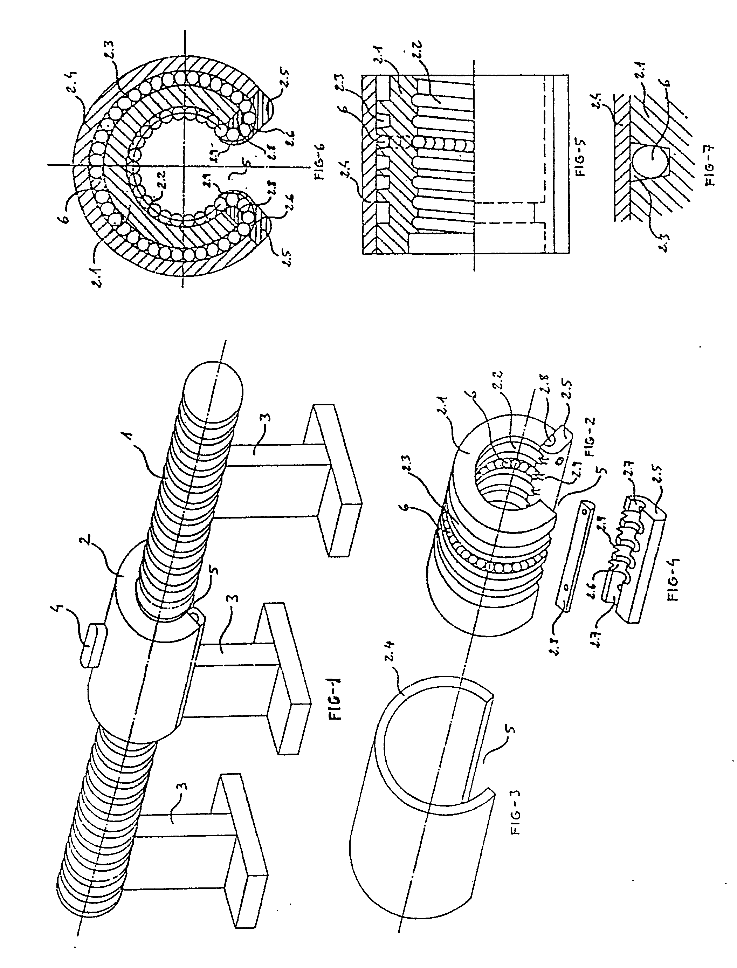

Fig. 1 shows a system comprising a spindle 1 and a slit or open nut 2 ; the spindle 1 rests on stationary columns or rests 3, a key or cotter or the like 4 being provided to prevent the nut 2 from turning. The operation of a system of this kind is such that when the spindle 1 turns, the non-rotatable nut 2 moves axially along the spindle 1, the rests 3 passing freely between the ends of the slit nut 5 ; consequently, the spindle 1 can be supported at as many places or as many rests 3 as required.

Figs. 2-4 are views of the slit nut simplified to its four basic parts.

Figs 2-4 show the basic parts making up the slit nut mechanism ; the same comprises a hollow cylindrical nut 2.1 which is shown in Fig. 2. It is formed with a longitudinal aperture or slit 5, engages some way around the spindle 1 and is formed on its inner periphery with a helical groove or channel 2.2, its outer periphery also being formed with a channel 2.3 of the same pitch and thread as the inner channel 2.2, the two channels being parallel throughout.

Fig. 3 shows a cylindrical sleeve or bush 2.4 whose inner periphery has a plain surface and extends around the outer periphery of the nut 2.1 ; the sleeve is formed with a longitudinal opening or slit 5 whose ends are parallel to the slit or opening in the nut 2.1.

Fig. 4 shows the two parts which make up the ball recirculating mechanism. The same is embodied by a cover 2.5 whose inside surface is formed with passages or channels in the form of parallel U-shaped grooves 2.6 of an appropriate cross-section for the balls to pass through. The separating walls between the channels 2.6 are also formed axially with a channel 2.7 in which bears a hemicylinder 2.8 which co-operates with the channels 2.6 to form passages of a cross-section, height and width appropriate for the diameter of the recirculating ball. The side surface is formed with parallel peripheral prolongations defining front spoon-shaped parts 2.9.

Figs. 5 and 6 are a longitudinal view and a front view respectively of the nut 2, showing the recirculating ball circuit.

Fig. 5 shows the operating arrangement of the recirculation of the balls 6 in a slit nut 2. When there is angular relative movement between the spindle 1 and nut 2 the balls 6 are collected from the groove in the spindle 1 and from the inner groove 2.2 by the action of the front spoon-shaped 2.9, whereafter the balls pass through the channel 2.6 in a cover 2.5 and are deposited in the outer groove 2.3 which forms a closed channel or tube with the sleeve 2.4. After the balls 6 have moved over the outer surface they return through the opposite cover 2.5 to the groove in the inner periphery 2.2, and so each inner groove 2.2 forms a closed circuit with its parallel outer groove 2.3. Fig. 5 shows the arrangement at one end of the slit 5 in the nut 2 of the section of the helical groove or channel 2.2 of the inner periphery and the outer parallel groove 2.3. The nut 2 can be formed with as many closed ball circuits as it has grooves 2.1.

Fig. 7 shows a detail of the cross-section of the closed outer groove 2.3 forming a tube for the passage of the balls 6 by means of the sleeve 2.4.

## Claims

1. A system comprising a recirculating ball spindle and an associated open nut, of use for supported screwthreaded spindles, with a screwthreaded spindle (1) threaded with a hemispherical-section helical groove or channel in its external cylindrical surface ; a hollow cylindrical nut (2), which engages via balls (6) around the spindle (1) and which comprises a nut body (2.1) with grooves (2.2.) in its internal periphery to match the spindle and grooves (2.3) on its external periphery, which are parallel to said grooves on the internal periphery ; a cylindrical sleeve or bush (2.4) whose inner periphery has a plain surface and extends around the outer periphery of the nut body (2.1) and a ball recirculating mechanism such that each pair of parallel internal and external grooves together with the ball recirculating mechanism forms a closed ball circuit ; and a number of said balls (6) inside the closed ball circuits characterised in that the nutbody (2.1) has a longitudinal slit (5), which is bounded by the intersection of the nut (2) with two longitudinal planes containing the radius and rotational axis of the nut and which has a width at the inner circumference of the nut body (2.1) which is less than the diameter of the spindle (1) ; and the ball recirculating mechanism comprises : two elongated prismatic covers (2.5) placed on each of the plane surfaces of the sides of the slit (5) each such cover being unitary, the same being formed with passages or channels (2.6) in the form of parallel U-shaped grooves of a cross-section such as to facilitate the passage of the balls (6) ; the channel-separating walls being formed axially with a channel (2.7) in which bears a hemicylinder (2.8) co-operating with the U-shaped channels (2.6) to bound passages of a cross-section height and width suitable for the diameter of the recirculating ball ; the cover side surface opposite the spindle surface being formed with parallel peripheral prolongations bounding spoon-shaped front parts (2.9) matching the channels in the spindle, so that the balls (6) are collected from the groove in the spindle (1) and moved to the groove (2.3) in the external periphery.

2. A system according to claim 1, characterised in that when there is relative rotation between the spindle (1) and the nut (2) the spindle (1) rotates and the nut moves axially, to which and any kind of means, such as a key or cotter or the like (4), is provided to secure the nut against rotation.

3. A system according to claims 1-2, characterised in that the spindle (1) is supported on stationary supports in the form of columns (3) along its whole length in the most appropriate form, and when the spindle (1) is rotated the slit nut (2) moves axially, the spindle support columns (3) passing between the ends of the nut slit (5).

4. A system according to claim 1, characterised in that the nut is divided in two parts which are preloaded to each other.

## Patentansprüche

1. System mit einer Spindel mit umlaufenden Kugeln und einer zugeordneten offenen Schraubenmutter, um Gewindespindeln zu tragen, mit einer Gewindespindel (1), die mit einer halbkreisförmigen schraubenförmigen Vertiefung, oder Kanal, auf ihrer äusseren zylindrischen Oberfläche gebildet ist ; eine hohlzylindrische Schraubenmutter (2), die die Spindel (1) durch Kugeln (6) umgreift und die einen Schraubenmutterkörper (2.1) mit Vertiefungen (2.2) in ihrem inneren Umfang aufweist, die mit einer Spindel zusammenpassen, und mit Vertiefungen (2.3) in ihrem äusseren Umfang, die parallel zu diesen Vertiefungen in ihrem inneren Umfang verlaufen ; eine zylindrische Hülse oder Büchse (2.4), deren innerer Umfang eine glatte Oberfläche hat und sich um den äusseren Umfang des Schraubenmutterkörpers (2.1) erstreckt und einen kugelumlaufenden Mechanismus aufweist, so dass jedes Paar innere und äussere parallele Vertiefungen zusammen mit dem kugelumlaufenden Mechanismus einen geschlossenen Kugelkreis bildet ; und eine Anzahl dieser Kugeln (6) im Inneren der geschlossenen Kugelkreisläufe, dadurch gekennzeichnet, dass der Schraubenmutterkörper (2.1) einen Längsschlitz (5), der durch den Schnitt von Schraubenmutter (2) mit zwei Längsebenen begrenzt ist, die den Radius und die Rotationsachse der Schraubenmutter beinhalten, und der eine Breite am inneren Umfang des Schraubenmutterkörpers (2.1) hat, der geringer ist als der Durchmesser der Spindel (1) ; und der kugelumlaufende Mechanismus zwei längliche prismatische Abdeckungen (2.5) aufweist, die auf jeder der ebenen Flächen der Seiten des Schlitzes (5) angeordnet sind, wobei jede dieser Abdeckungen einstückig ist und mit Durchgängen oder Kanälen (2.6) ausgebildet ist, die die Form von parallelen U-förmigen Vertiefungen mit einem Querschnitt haben, der den Durchgang der Kugeln (6) ermöglicht ; wobei die kanaltrennenden Wände in axialer Richtung mit einem Kanal (2.7) ausgebildet sind, der einen Halbzylinder (2.8) aufnimmt, der mit den U-förmigen Kanälen (2.6) zusammenwirkt, um Durchgänge mit einer Höhe und Breite im Querschnitt, die dem Durchmesser der umlaufenden Kugeln angepasst sind, zu begrenzen, wobei die der Spindeloberfläche abgewandte Seitenoberfläche der Abdeckungen mit parallelen vorstehenden Fortsätzen ausgebildet ist, die löffelförmige Vorderteile (2.9) bilden, die mit den Kanälen in der Spindel zusammenpassen, so dass die Kugeln (6) von der Vertiefung in der Spindel (1) aufgefangen werden und zur Vertiefung (2.9) in dem äusseren Umfang abgesetzt werden.

2. System nach Anspruch 1, dadurch gekennzeichnet, dass sich bei einer Ralativdrehung zwischen Spindel (1) und Schraubenmutter (2) die Spindel (1) dreht und die Schraubenmutter sich axial bewegt, weswegen irgendeine Art von Einrichtung, wie etwa ein Längskeil oder Querkeil oder dergleichen (4), vorgesehen ist, um die Schraubenmutter gegen Drehung zu sichern.

3. System nach den Ansprüchen 1-2, dadurch gekennzeichnet, dass die Spindel (1) auf feststehenden Lagern in Form von Säulen (2) entlang ihrer gesamten Länge auf die geeignetste Art gelagert ist, und wenn die Spindel (1) gedreht wird, bewegt sich die geschlitzte Schraubenmutter (2) axial, wobei die Spindellagersäulen (3) zwischen den Enden des Schraubenmutterschlitzes (5) durchlaufen.

4. System nach Anspruch 1, dadurch gekennzeichnet, dass die Schraubenmutter in zwei Teile getrennt ist, die miteinander vorgespannt sind.

## Revendications

1. Système comprenant une broche à recirculation de billes et un écrou ouvert associé, utilisé pour supporter des broches filetées, avec une broche (1) filetée par un canal ou rainure hélocoïdal de section hémisphérique à sa surface cylindrique extérieure ; un écrou cylindrique creux (2) qui s'engage par billes (6) autour de la broche (1) et comporte un corps d'écrou (2.1) et un mécanisme de recirculation de billes tel que chaque paire de rainures internes et externes parallèles conjointement au mécanisme de recirculation de billes forme un circuit fermé de billes; et un nombre des dites billes (6) dans les circuits fermés de billes, caractérisé en ce que le corps d'écrou (2.1) a une fente longitudinale qui est limitée par l'intersection de l'écrou (2) avec deux plans longitudinaux contenant le rayon et l'axe de rotation de l'écrou, et qui a une largeur à la circonférence intérieure du corps d'écrou (2.1) qui est inférieure au diamètre de la broche (1) ; et le mécanisme de recirculation de billes comprend deux couvercles prismatiques oblongs (2.5) disposés sur chacune des surfaces planes des côtés de la fente (5), chacun de ces couvercles étant d'une seule pièce et étant pourvue de passages ou canaux (2.6) en forme de rainures parallèles en U, d'une section transversale telle qu'elle facilite le passage des billes (6) ; les parois de séparation du canal étant munies axialement d'un canal (2.7) dans lequel porte un demi-cylindre (2.8) coopérant avec les canaux en forme de U (2.6) pour définir des passages d'une hauteur et largeur en section transversale adaptés au diamètre de la bille de recirculation ; la surface latérale du couvercle opposée à la surface de la broche étant munie d'extensions périphériques parallèles définissant des parties frontales en forme de cuiller (2.9) correspondant aux canaux de la broche, de sorte que les billes (6) sont collectées à partir de la rainure de la broche (1) et déplacées vers la rainure (2.3) de la périphérie extérieure.

2. Système selon la revendication 1, caractérisé en ce qu'il y a une rotation relative entre la broche (1) et l'écrou (82), la broche (1) tourne et l'écrou se déplace axialement, des moyens quelconques, tels qu'une clavette, une goupille ou analogue (4) étant prévus dans ce but pour bloquer l'écrou contre rotation.

3. Système selon les revendication 1 et 2, caractérisé en ce que la broche (1) est supportée sur des supports fixes en forme de colonnes (3) sur toute sa longueur de la manière la mieux appropriée et que, lorsque la broche (1) est tournée, l'écrou fendu (2) se-déplace axialement, les colonnes de support de broche (3) passant entre les extrémités de la fente (5) de l'écrou.

4. Système selon la revendication 1, caractérisé en ce que l'écrou est divisé en deux parties qui sont précontraintes l'une contre l'autre.

FIG-6

FIG-5

FIG-7

FIG-1

FIG-2

FIG-3

FIG-4